# EUROPÄISCHE PATENTSCHRIFT

(11) **EP 2 519 460 B1**
(45) Veröffentlichungstag und Bekanntmachung des Hinweises auf die Patenterteilung: **05.03.2014**
(21) Anmeldenummer: 10787053.7
(22) Anmeldetag: 19.11.2010
(51) Int. Cl.: B65G 45/16

(54) **ANORDNUNG ZUM ABSTREIFEN VON MATERIAL VOM UNTERTRUMM EINES GURTFÖRDERERS**
DEVICE FOR STRIPPING MATERIAL FROM THE LOWER RUN OF A BELT CONVEYOR.
APPAREIL POUR RACLER DE LA MATIÈRE DU CÔTÉ INFÉRIEUR D' UN CONVOYEUR À COURROIE.

(30) Priorität: 30.12.2009 DE 102009060875
(43) Veröffentlichungstag der Anmeldung: 07.11.2012
(73) Patentinhaber: Dünnwald, Wilfried, 47475 Kamp-Lintfort (DE)
(72) Erfinder: Dünnwald, Wilfried, 47475 Kamp-Lintfort (DE)
(74) Vertreter: Cohausz & Florack
(86) Internationale Anmeldenummer: PCT/EP2010/067797
(87) Internationale Veröffentlichungsnummer: WO 2011/080006

(56) Entgegenhaltungen:
- EP-A1- 0 270 143
- DE-A1- 19 955 421
- GB-A- 1 159 738
- US-A- 4 535 883

## Beschreibung

Die Erfindung betrifft eine Anordnung zum Abstreifen von Material vom Untertrumm des Fördergurts eines Gurtförderers, welche in Gruppen gegliederte, über die Breite des Fördergurts verteilt angeordnete, federnd elastisch an der Unterseite des Untertrumms anliegende Schaber aufweist, die alle zur Laufrichtung des Untertrumms schräg angeordnet sind, wobei die Schaber einer ersten Gruppe abgewinkelt in Bezug auf die Schaber einer benachbarten zweiten Gruppe ausgerichtet sind.

Eine derartige Anordnung ist aus der DE 102 55 253 B3 bekannt. Die Schaber der bekannten Anordnung sind leistenartig ausgebildet und jeweils über zwei satteldachartig einander zugeordnete Lenker unterhalb des Untertrumms mittelbar am Traggerüst des Gurtförderers schwenkbeweglich abgestützt. Dabei ist jeweils ein schräg nach unten gegen die Laufrichtung des Untertrumms weisender erster Lenker, der bogenförmig ausgebildet ist, mit seinem oberen Ende an das gegen die Laufrichtung weisende vordere Ende des Schabers über eine erste Schwenkachse und mit seinem unteren Ende über eine horizontale zweite Schwenkachse mittelbar an das Traggerüst gelenkig angeschlagen. Der zweite Lenker besteht dagegen aus einem eine Druckfeder aufweisenden Stoßdämpfer, der mit federnd elastischer Rückstellkraft den Schaber etwa im mittleren Längenbereich gelenkig unterfängt und sich in Laufrichtung des Untertrumms schräg nach oben erstreckt. Die erste Schwenkachse zwischen dem oberen Ende des ersten Lenkers und dem Schaber sowie die horizontal ausgerichtete zweite Schwenkachse zwischen dem unteren Ende des ersten Lenkers und dem Traggerüst sind schräg zur Laufrichtung des Untertrumms angeordnet, wobei der Winkel zwischen den beiden Schwenkachsen, in der Draufsicht gesehen, spitz gestaltet ist. Der zweite Lenker erstreckt sich entgegengesetzt zum ersten Lenker vom Schaber schräg seitlich nach unten und ist sowohl mit dem Schaber als auch mit dem Traggerüst über Raumgelenke bildende Gelenkköpfen raumgelenkig verbunden. Der Winkel der Schrägstellung der Schaber relativ zur Laufrichtung des Untertrumms beträgt etwa 15°.

Die aus der DE 102 55 253 B3 bekannte Anordnung weist gegenüber den bislang in der Praxis eingesetzten Anordnungen zum Abstreifen von Material von einem Fördergurt Vorteile hinsichtlich der Reinigungswirkung auf, kann jedoch noch verbessert werden. Praktische Versuche haben gezeigt, dass die Reinigungswirkung einer solchen Anordnung bei welligem Verlauf des Untertrumms, in Querrichtung gesehen, in der Mitte des Fördergurtes oft nicht befriedigend ist. Die Beweglichkeit des jeweiligen Schabers ist zwar gegenüber der Beweglichkeit der Schaber herkömmlicher Vorrichtungen zum Abstreifen von Material vom Untertrumm eines Fördergurts verbessert, aber dennoch beschränkt, da die beiden endseitigen Schwenkachsen des ersten Lenkers jeweils nur einen Freiheitsgrad haben. Da sich Fördergurte im Untertrumm üblicherweise ausbauchen, so dass sich in Längsrichtung des Untertrumms erstreckende Wellentäler und Wellenberge ergeben, liegen die leistenförmigen, schräg zur Laufrichtung des Untertrumms angeordneten Schaber mitunter nicht über ihre gesamte Reinigungskantenlänge am Untertrumm an, so dass der gewünschte Reinigungseffekt stellenweise nicht erreicht wird. Der vorliegenden Erfindung liegt die Aufgabe zugrunde, eine Anordnung zum Abstreifen von Material vom Untertrumm des Fördergurts eines Gurtförderers zu schaffen, die ihre Funktionstüchtigkeit auch dann behält, wenn der Fördergurt wellig wird und/oder wenn Schäden am Fördergurt bzw. an den Verbindungen der einzelnen Längenabschnitte des Fördergurtes Querbeanspruchungen auf die Schaber ausüben. Insbesondere liegt der Erfindung die Aufgabe zugrunde, eine Anordnung zum Abstreifen von Material vom Untertrumm des Fördergurts eines Gurtförderers zu schaffen, die gegenüber der aus der DE 102 55 253 B3 bekannten Anordnung eine verbesserte, schonende Reinigungswirkung insbesondere bei welligem Fördergurt bietet.

Diese Aufgabe wird durch eine Anordnung mit den Merkmalen des Anspruchs 1 gelöst.

Die erfindungsgemäße Anordnung weist in Gruppen gegliederte, über die Breite des Fördergurts verteilt angeordnete, federnd elastisch an der Unterseite des Untertrumms anliegende Schaber auf, die alle zur Laufrichtung des Untertrumms schräg angeordnet sind, wobei die Schaber einer ersten Gruppe abgewinkelt in Bezug auf die Schaber einer benachbarten zweiten Gruppe ausgerichtet sind. Die erfindungsgemäße Anordnung ist zudem dadurch gekennzeichnet, dass der jeweilige Schaber über mindestens zwei gewundene Schenkelfedern wenigstens mittelbar am Traggerüst des Gurtförderers abgestützt ist, wobei die jeweilige Schenkelfeder mit ihrem oberen Ende mit einem in Laufrichtung vorderen oder hinteren Endabschnitt des Schabers verbunden ist, mit ihrem unteren Ende drehbar mit einer Querstrebe eines am Traggerüst des Gurtförderers montierten Tragrahmens verbunden ist und mindestens einen im Wesentlichen schräg zur Laufrichtung sowie schräg nach unten gegen die Laufrichtung weisenden Schenkelabschnitt aufweist.

Die erfindungsgemäße Anordnung zeichnet sich durch eine relativ geringe Masse aus. Durch die Schenkelfedern besitzen die Schaber mehr Freiheitsgrade sowie eine geringe Massenträgheit, so dass sie sich genauer und schneller der Kontur (Topographie) der Unterseite des Untertrumms des Fördergurts anpassen können. Die Schenkelfedern verbessern die Flexibilität der Schaber insbesondere beim Auftreffen auf Schadstellen des Fördergurts sowie auf Verbindungsstellen der einzelnen Längenabschnitte des Fördergurts.

Die erfindungsgemäße federnd elastische Abstützung des jeweiligen Schabers mittels mindestens zweier spezieller Schenkelfedern stellt sicher, dass der Schaber nicht nur nach unten abtauchen kann, wenn abzustreifendes Material extrem fest an der Unterseite des Untertrumms haftet, so dass der Schaber gegebenenfalls über dieses Material hinweg gleiten kann, der Schaber kann auch seitlich ausweichen, wenn Schäden am Fördergurt oder an den Gurtverbindungen Querbeanspruchungen auf ihn ausüben.

In einer vorteilhaften Ausgestaltung der erfindungsgemäßen Anordnung ist der jeweilige Schaber schräg zur Laufrichtung des Untertrumms in einem Winkel im Bereich von 25° bis 55°, vorzugsweise im Bereich von 30° bis 50° angeordnet.

Eine weitere vorteilhafte Ausgestaltung der erfindungsgemäßen Anordnung besteht darin, dass die an dem jeweiligen Schaber montierten Schenkelfedern im Wesentlichen identisch ausgebildet sind und/oder gleichsinnig ausgerichtet sind. Hierdurch lässt sich die Fertigung der Schenkelfedern bzw. die Montage der Anordnung rationalisieren, wodurch insgesamt verringerte Fertigungskosten bei der erfindungsgemäßen Anordnung erzielt werden können. Die Schenkelfedern der ersten Gruppe sind vorzugsweise spiegelbildlich zu den Schenkelfedern der zweiten Gruppe geformt.

Nach einer weiteren bevorzugten Ausgestaltung der Erfindung ist das obere Schenkelfederende mit dem vorderen oder hinteren Endabschnitt des Schabers gelenkig verbunden. Die gelenkige Verbindung des Schabers mit dem oberen Schenkelfederende verbessert die Bewegungsmöglichkeiten des jeweiligen Schabers hinsichtlich einer optimalen Reinigungswirkung sowie Flexibilität für ein Ausweichen des Schabers beim Auftreffen auf Gurtverbindungsmittel und/oder aus dem Fördergurt herausstehende Schadstellen, insbesondere Festkörperteile.

Eine weitere vorteilhafte Ausgestaltung der erfindungsgemäßen Anordnung ist dadurch gekennzeichnet, dass das untere Schenkelfederende in eine in der Querstrebe ausgebildete Bohrung drehbar eingesteckt ist, wobei die Längsachse der Bohrung schräg zur Vertikalen verläuft. Diese Ausgestaltung verbessert ebenfalls die Bewegungsmöglichkeiten des jeweiligen Schabers hinsichtlich einer optimalen Reinigungswirkung und des Ausweichvermögens des Schabers beim Auftreffen auf Gurtverbindungsmittel und/oder aus dem Fördergurt herausstehende Festkörper. Insbesondere kann durch diese Ausgestaltung sichergestellt werden, dass im Falle eines eventuellen Zerbrechens des Schabers infolge einer heftigen Schlageinwirkung die Schenkelfeder mit einem daran noch befestigten Bruchstück des Schabers vom Fördergurt wegschwenkt, so dass das scharfkantige Schaberbruchstück den Fördergurt nicht beschädigt.

Um eine konstruktiv einfache sowie zuverlässige Verbindung, vorzugsweise Gelenkverbindung zwischen Schenkelfeder und Schaber zu erzielen, sieht eine weitere bevorzugte Ausgestaltung der Erfindung vor, dass das obere Schenkelfederende ösenförmig ausgebildet ist. Das ösenförmige Schenkelfederende lässt sich drehbar auf einen entsprechenden Schraub- oder Nietbolzen aufstecken, der dann mit dem Schaber bzw. einem den Schaber haltenden Träger verbunden werden kann.

Hinsichtlich einer optimalen Reinigungswirkung und eines flexiblen Ausweichverhaltens des jeweiligen Schabers bei Auftreffen von Gurtverbindungsmitteln bzw. aus der Fördergurtunterseite vorstehenden Fremdkörpern ist es ferner vorteilhaft, wenn gemäß einer weiteren bevorzugten Ausgestaltung der Erfindung das obere Schenkelfederende mit dem mindestens einen im Wesentlichen schräg zur Laufrichtung des Untertrumms des Fördergurts sowie schräg nach unten gegen die Laufrichtung des Untertrumms weisenden Schenkelabschnitt der Schenkelfeder einen Winkel im Bereich von 95° und 120°, vorzugsweise im Bereich von 100° bis 115°, einschließt.

Ferner ist es für eine optimale Reinigungswirkung vorteilhaft, wenn gemäß einer bevorzugten Ausgestaltung der jeweilige Schaber relativ zur Ebene der Unterseite des Untertrumms um seine Längsachse gekippt ausgerichtet ist, wobei der Winkel zwischen der Unterseite des Untertrumms und der Mittellängsebene des Schabers im Bereich von 95° bis 115° liegt, vorzugsweise im Bereich von 100° bis 115° liegt. Hierdurch ergibt sich eine stechende Arbeitsweise des jeweiligen Schabers.

Eine weitere für die Reinigungswirkung und das flexible, schnelle Ausweichverhalten des Schabers günstige Ausgestaltung ist dadurch gekennzeichnet, dass die jeweilige Schenkelfeder mindestens eine federnde Windung und zwei im Wesentlichen schräg zur Laufrichtung sowie schräg nach unten gegen die Laufrichtung weisende Schenkel aufweist, wobei die mindestens eine federnde Windung vorzugsweise zwischen den beiden im Wesentlichen schräg zur Laufrichtung sowie schräg nach unten gegen die Laufrichtung weisenden Schenkelabschnitte integriert ist.

Außerdem hat es sich für die Reinigungswirkung der leistenförmigen Schaber als günstig erwiesen, wenn gemäß einer weiteren bevorzugten Ausgestaltung der Erfindung das untere Schenkelfederende mit dem mindestens einen im Wesentlichen schräg zur Laufrichtung des Untertrumms des Fördergurts sowie schräg nach unten gegen die Laufrichtung des Untertrumms weisenden Schenkelabschnitt der Schenkelfeder einen Winkel im Bereich von 110° und 120°, vorzugsweise im Bereich von 112° bis 118° einschließt.

Nachfolgend wird die Erfindung anhand einer mehrere Ausführungsbeispiele darstellenden Zeichnung näher erläutert. Es zeigen:
- Fig. 1: eine perspektivische Ansicht einer Anordnung zum Abstreifen von Material vom Untertrumm des Fördergurts eines Gurtförderers;
- Fig. 2: die Anordnung zum Abstreifen von Material gemäß Fig. 1, in Vorderansicht;
- Fig. 3: die Anordnung zum Abstreifen von Material gemäß Fig. 1, in Draufsicht;
- Fig. 4: einen vertikalen Querschnitt durch die Darstellung der Fig. 2 entlang der Linie A-A;
- Fig. 5: einen vertikalen Querschnitt durch die Darstellung der Fig. 3 entlang der Linie B-B;
- Fig. 6: eine in der Anordnung zum Abstreifen von Material gemäß Fig. 1 eingesetzte Schenkelfeder in Unteransicht;
- Fig. 7: die Schenkelfeder der Fig. 6 in einer Kopfansicht bzw. Draufsicht;
- Fig. 8: die Schenkelfeder der Fig. 6 in einer perspektivischen Ansicht;
- Fig. 9: die Schenkelfeder der Fig. 6 in einer Seitenansicht;
- Fig. 10: die Anordnung zum Abstreifen von Material gemäß Fig. 1 mit einer am Traggerüst eines Gurtförderers montierbaren Lenkeraufhängung, in Seitenansicht;
- Fig. 11: die Anordnung zum Abstreifen von Material gemäß Fig. 1 mit einer zweiten Ausführung einer am Traggerüst eines Gurtförderers montierbaren Lenkeraufhängung (Halterung), in Seitenansicht; und
- Fig. 12: einen weiteren vertikalen Querschnitt durch einen Schaber im Verbindungsbereich einer Schenkelfeder.

In der Zeichnung ist mit 1 eine Anordnung zum Abstreifen von Material vom Untertrumm des Fördergurts eines Gurtförderers bezeichnet. Die Anordnung 1 umfasst einen vormontierten Tragrahmen 2, der in das nicht näher dargestellte Traggerüst des Gurtförderers lösbar und einstellbar integriert werden kann.

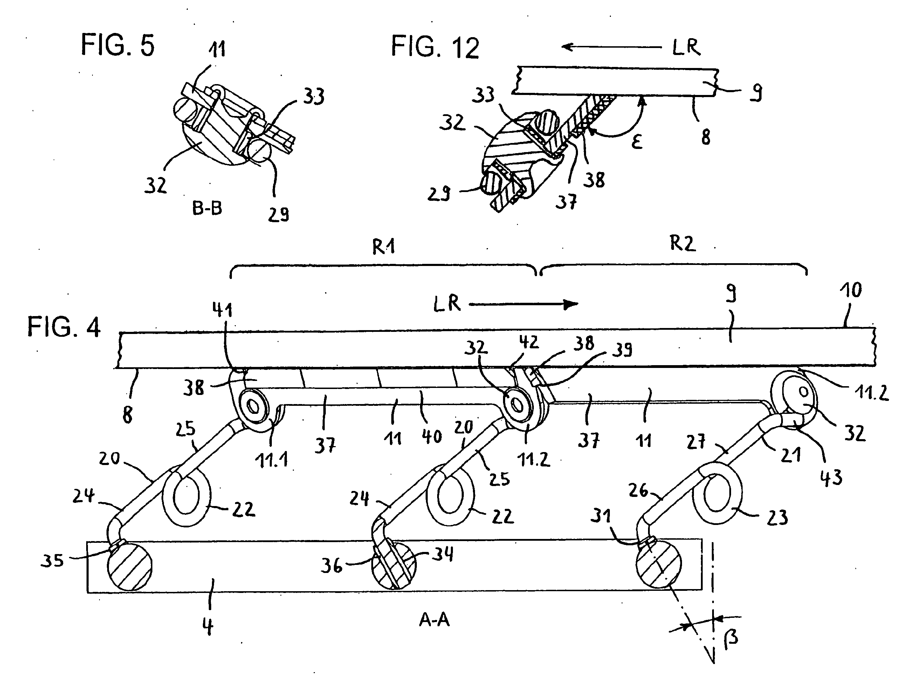

An zwei Längsträgern 3, 4 des Tragrahmens 2 sind drei Querstreben 5, 6, 7 gehalten, die aus Rohren oder Vollmaterialstangen bestehen. In dem dargestellten Ausführungsbeispiel sind die Querstreben 5, 6, 7 aus Vollmaterialstangen bzw. Rundstäben gebildet. Die Querstreben 5, 6, 7 dienen der schwenkbeweglichen Abstützung von an der Unterseite 8 des Untertrumms 9 des Fördergurts 10 anliegenden leistenförmigen Schabern 11 (vgl. Fig. 4).

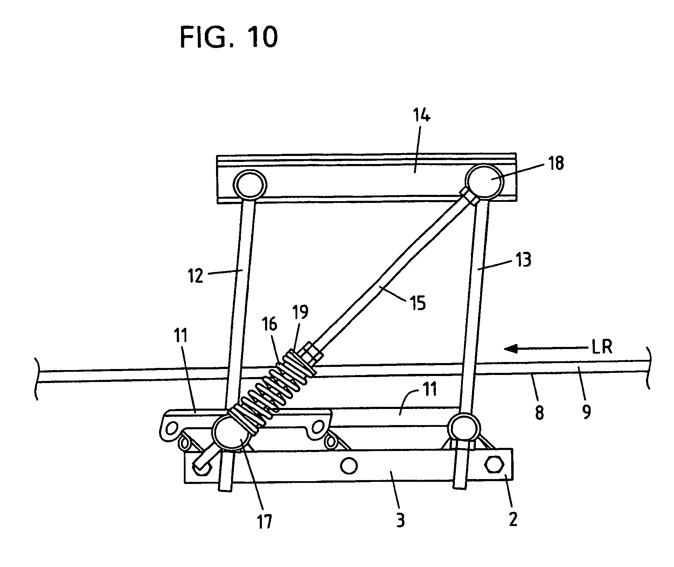

Der Tragrahmen 2 ist vorzugsweise mittels Lenkern 12, 13 an dem Traggerüst des Gurtförderers aufgehängt (vgl. Fig. 10). An den Längsträgern 3, 4 des Tragrahmens 2 sind jeweils zwei Lenker 12, 13 mit ihren unteren Enden angelenkt. Die oberen Enden der Lenker 12, 13 sind an einem oberen Längsträger 14, der mit dem Traggerüst des Gurtförderers verbunden wird, oder unmittelbar an dem Traggerüst des Gurtförderers angelenkt, so dass sich eine Parallelogrammführung ergibt. Der Abstand der Drehachsen der Gelenke des oberen Längsträger 14 entspricht dem Abstand der Drehachsen der Gelenke des Längsträgers 3, 4 des Tragrahmens 2. Zwischen dem in Laufrichtung LR des Untertrumms 9 hinteren Lenker 12 und dem vorderen Lenker 13 ist ein dritter Lenker (Diagonallenker) 15 eingegliedert, der mit einer integrierten Druckfeder 16 versehen ist. Der diagonal angeordnete Lenker 15 ist dabei an dem in Laufrichtung LR des Untertrumms 9 hinteren Gelenk 17 des Längsträgers 3 des Tragrahmens 2 und dem in Laufrichtung des Untertrumms 9 vorderen Gelenk 18 des oberen Längsträgers 14 bzw. Traggerüstes angelenkt. Der Abstand zwischen diesen beiden Gelenken 17, 18 bzw. deren Drehachsen und damit die Position des Tragrahmens 2 relativ zu dem Untertrumm 9 ist verstellbar. Hierzu besitzt der dritte Lenker 15 zumindest an einem unteren Längenabschnitt einen als Gewindestange ausgebildeten Endabschnitt mit Muttern und Kontermuttern. Vorzugsweise sind alle drei an dem jeweiligen Längsträger des Tragrahmens 2 gelenkig angeschlagenen Lenker 12, 13, 15 aus Gewindestangen gebildet, an deren Enden mit den Längsträgern 3, 4, 14 bzw. dem Traggerüst dreh- oder schwenkbar verbundene Gelenkzapfen montiert sind. Ferner weist der dritte Lenker 15 zwischen den Gelenken 17, 18 ein Abstützlager 19 für die Druckfeder 16 auf. Das Abstützlager 19 kann beispielsweise durch auf die Gewindestange 15 aufgeschraubte Muttern (Mutter und Kontermutter) und eine ringförmige Stützscheibe gebildet sein, wobei die Stützscheibe vorzugsweise mit einem daran einstückig angesetzten hohlzylinderförmigen Zapfen versehen ist, der in die Druckfeder 16 eingreift.

Die Schaber 11 sind in zwei in Laufrichtung LR des Untertrumms 9 hintereinander liegenden Reihen R1, R2 angeordnet. Die Schaber 11 in der jeweiligen Reihe bilden eine Gruppe G1 bzw. G2. Die Schaber 11 in den Gruppen G1, G2 erstrecken sich alle schräg zur Laufrichtung LR des Untertrumms 9, wobei die Schaber 11 der einen Gruppe G1 jedoch abgewinkelt in Bezug auf die Schaber 11 der benachbarten anderen Gruppe G2 ausgerichtet sind. Die Schaber 11 der jeweiligen Gruppe G1, G2 bzw. Reihe R1, R2 sind jeweils parallel zueinander ausgerichtet. Der Winkel ϕ der Schrägstellung der Schaber 11 gegenüber der Laufrichtung LR des Untertrumms 9 beträgt ca. 40°.

Die Schaber 11 der zweiten Reihe R2 sind gegenüber den Schabern 11 der ersten Reihe R1 so angeordnet, dass jeder von den Schabern 11 der ersten Reihe R1 überstrichene Punkt der Unterseite 8 des Untertrumms 9 von den Schabern 11 der zweiten Reihe R2 mindestens zweimal bestrichen bzw. gereinigt wird.

Durch diese Anordnung der Schaber 11 relativ zur Unterseite 8 des Untertrumms 9 werden alle Bereiche des Untertrumms über die gesamte Breite B von den Schabern 11 reinigend kontaktiert. Darüber hinaus stellt diese fischgrätartige Anordnung der Schaber 11 sicher, dass keine Querbeanspruchungen auf das Untertrumm 9 ausgeübt werden, welche zu einer Verlagerung des Untertrumms 9 quer zu seiner Laufrichtung LR führen könnten.

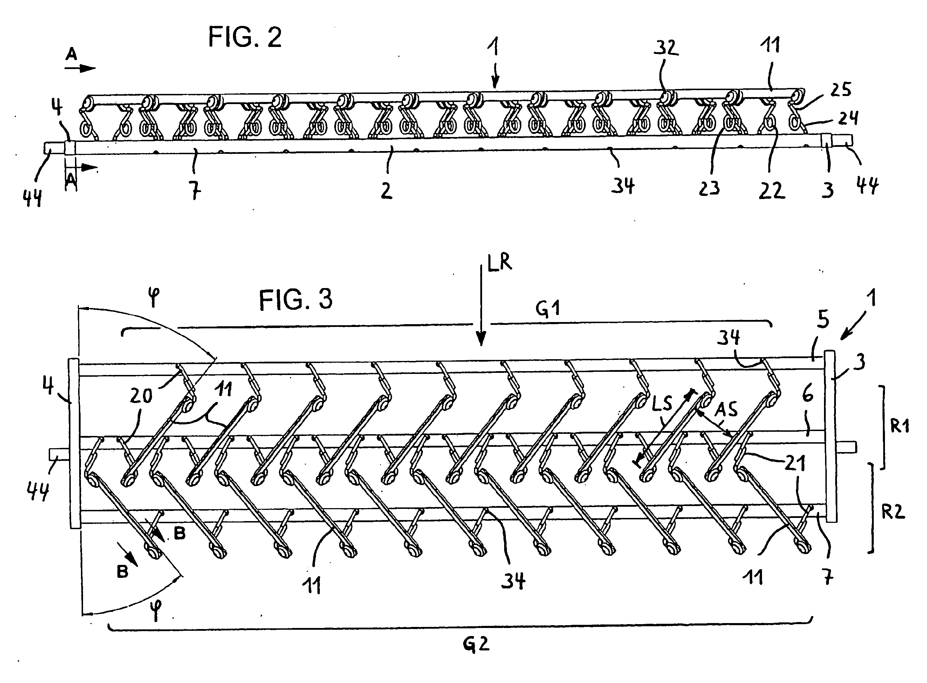

Das Verhältnis der Länge LS der die Unterseite 8 des Untertrumms 9 kontaktierenden Längskante des jeweiligen Schabers 11 zum kürzesten Abstand AS zwischen zwei benachbarten Schabern 11 einer Reihe R1, R2 bzw. Gruppe G1, G2 liegt vorzugsweise im Bereich von 2,5 bis 1,8. In dem dargestellten Ausführungsbeispiel liegt dieses Verhältnis LS:AS etwa im Bereich von 1,9 bis 2,1 (vgl. Fig. 3).

Der jeweilige Schaber 11 ist über zwei gewundene Schenkelfedern 20, 21 an jeweils zwei benachbarten Querstreben 4, 5 bzw. 5, 6 der parallel zueinander verlaufenden Querstreben abgestützt. Die jeweilige Schenkelfeder 20, 21 ist dabei mit ihrem oberen Ende gelenkig mit dem in Laufrichtung LR des Untertrumms 9 des Fördergurts 10 vorderen Endabschnitt 11.1 bzw. dem hinteren Endabschnitt 11.2 des Schabers 11 und mit ihrem unteren Ende gelenkig mit der Querstrebe 4, 5 bzw. 6 verbunden. Die Schenkelfedern 20, 21 sind aus Rundstab-Federstahl gebildet, der einen Durchmesser von beispielsweise ca. 6 mm besitzt.

Die Schenkelfedern 20 bzw. 21 des jeweiligen Schabers 11 sind identisch ausgebildet. Ebenso sind die Schenkelfedern 20 bzw. 21 der jeweiligen Reihe R1, R2 bzw. Gruppe G1, G2 identisch ausgebildet und gleichsinnig ausgerichtet. Die Schenkelfedern 20 der einen Reihe R1 bzw. Gruppe G1 unterscheiden sich jedoch von den Schenkelfedern 21 der anderen Reihe R2 bzw. Gruppe G2 insofern als sie spiegelbildlich zueinander ausgebildet sind.

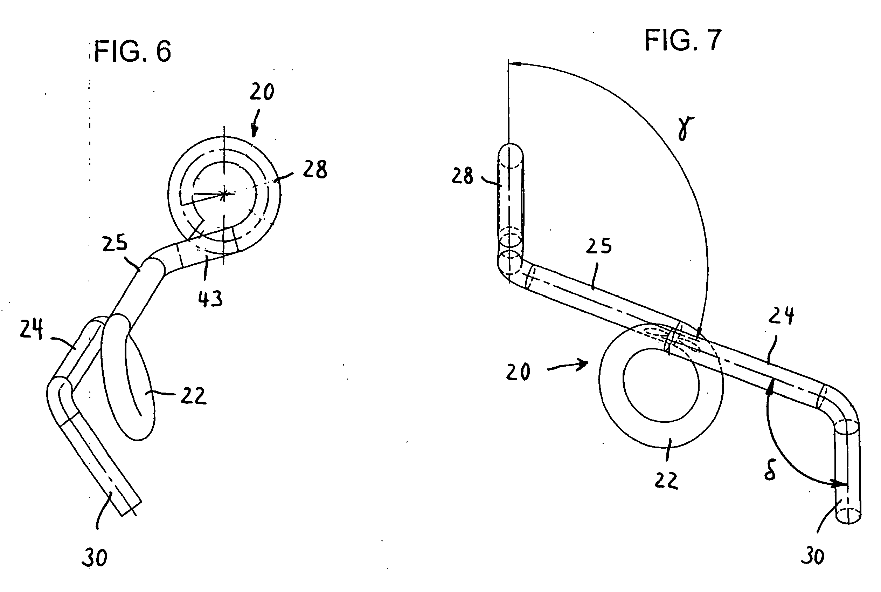

Die Figuren 6 bis 9 zeigen eine Schenkelfeder 20, die den Schenkelfedern in der in Laufrichtung LR des Untertrumms 9 gesehen ersten Reihe R1 (Gruppe G1) entspricht.

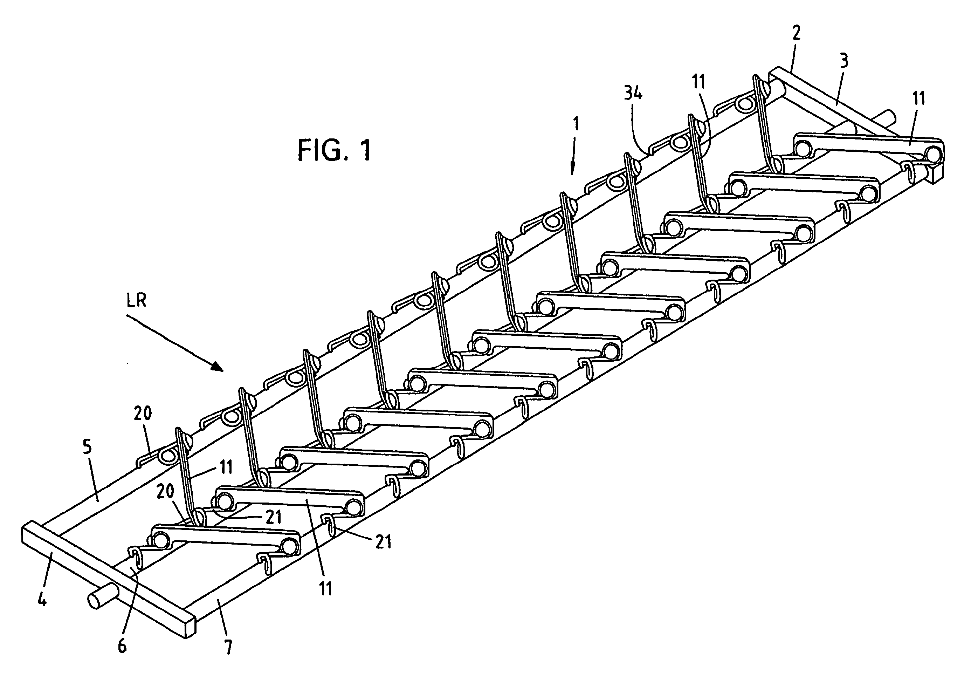

Der Pfeil LR in den Figuren 1 und 3 gibt die Laufrichtung LR des Untertrumms 9 des (dort nicht dargestellten) Fördergurts an. Jede der Schenkelfedern 20, 21 weist eine federnde Windung 22 bzw. 23 und zwei im Wesentlichen schräg zur Laufrichtung LR sowie schräg nach unten gegen die Laufrichtung LR weisende Schenkelabschnitte 24, 25 bzw. 26, 27 auf. Die Windung 22, 23 ist zwischen den beiden geradlinigen Schenkelabschnitten 24, 25 bzw. 26, 27 integriert (vgl. insbesondere Fig. 4).

Das obere Schenkelfederende 28, 29 sowie das untere Schenkelfederende 30, 31 sind jeweils gegenüber den von der Windung 22, 23 kommenden Schenkelabschnitten 24, 25 bzw. 26, 27 abgewinkelt. Die beiden geradlinigen Schenkelabschnitte 24, 25 bzw. 26, 27, die von der Windung 22, 23 ausgehen und sich bis zu den abgewinkelten Schenkelfederenden 28, 30 bzw. 29, 31 erstrecken, sind im Wesentlichen gleich lang. Die Enden 28, 30 bzw. 29, 31 der jeweiligen Schenkelfeder 20, 21 sind in verschiedene Richtungen sowie mit verschiedenen Winkeln γ und δ gegenüber den mittleren Schenkelabschnitten 24, 25 bzw. 26, 27 abgewinkelt.

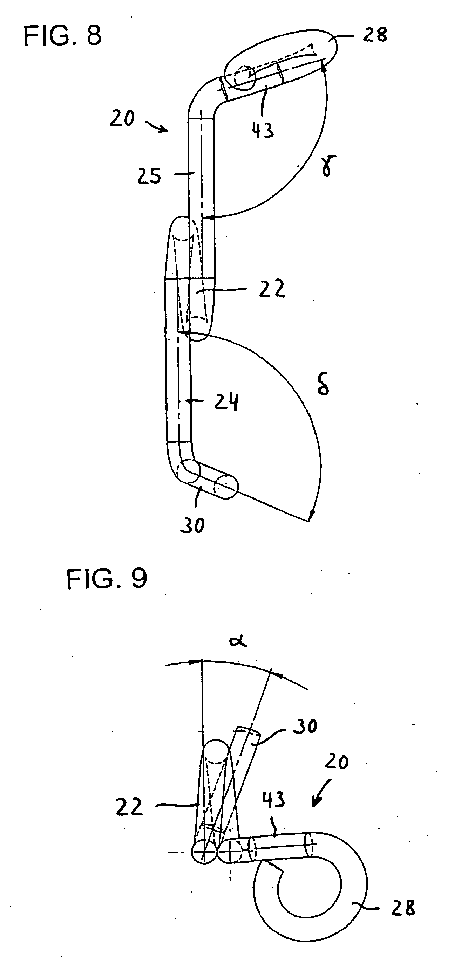

Das untere Schenkelfederende 30, 31 ist zudem gegenüber der mittleren Radialebene der Windung 22, 23 abgewinkelt, wobei der Winkel α zwischen der Längsmittelachse des unteren Schenkelfederendes 30, 31 und der mittleren Radialebene der Windung 22, 23 ca. 20° beträgt (vgl. Fig. 9). Die Längsmittelachse des unteren Schenkelfederendes 30, 31 ist somit gegenüber der Radialebene der Windung verdreht ausgebildet.

Das obere Schenkelfederende 28 bzw. 29 ist ösenförmig ausgebildet und mittels eines Metallbolzens oder Niets 32 mit dem Schaber 11 verbunden (vgl. Fig. 5). Auf den Metallbolzen oder Niet 32 ist ein Abstandsring 33 in Form einer Hülse aufgesteckt, deren axiale Länge etwas größer als der Durchmesser des Rundstab-Federstahls der Schenkelfeder 21 (bzw. 20) ist. Die Hülse 33 ist innerhalb der Schenkelfederöse 28, 29 angeordnet und zwischen dem Schaber 11 und dem einen größeren Durchmesser aufweisenden Kopf des Metallbolzens oder Niets 32 eingespannt. Der Innendurchmesser der Schenkelfederöse 28, 29 ist größer als der Außendurchmesser der Hülse 33. Somit ist sichergestellt, dass die Verbindung zwischen dem oberen Ende 28, 29 der Schenkelfeder 20, 21 und dem Schaber 11 eine leichtgängige Gelenkverbindung ist.

Das untere Schenkelfederende 30, 31 ist in eine in der Querstrebe 5, 6, 7 ausgebildete Bohrung 34 drehbar eingesteckt. Die Längsachse der Bohrung 34 verläuft schräg zur Vertikalen und im Wesentlichen rechtwinklig zur Längsachse der jeweiligen Querstrebe 5, 6, 7. Der von der Längsmittelachse der Bohrung 34 und der Vertikalen eingeschlossene Winkel β liegt im Bereich von 25° und 35°, er beträgt beispielsweise ca. 30°. Das untere Schenkelfederende 30, 31 ist mit einer einen Bund oder Flansch 35 aufweisenden Metallhülse 36 versehen, die in die dem unteren Schenkelfederende zugeordnete Bohrung 34 eingesteckt ist.

Das obere, ösenförmige Schenkelfederende 28, 29 bzw. der im Wesentlichen geradlinige, abgewinkelte Schenkelabschnitt 43 schließt mit dem schräg zur Laufrichtung LR sowie schräg nach unten gegen die Laufrichtung LR weisenden geradlinigen Schenkelabschnitt 25 bzw. 27 der Schenkelfeder 20, 21 einen Winkel γ im Bereich von 95° und 120° ein. Bei der in den Figuren 6 bis 9 dargestellten Schenkelfeder 20 beträgt der Winkel γ ca. 110°. Das untere Schenkelfederende 30, 31 schließt dagegen mit dem geradlinigen, schräg zur Laufrichtung LR sowie schräg nach unten gegen die Laufrichtung LR weisenden Schenkelabschnitt 24 bzw. 26 einen Winkel δ im Bereich von ca. 114° ein.

Jeder Schaber 11 ist aus einer Tragleiste 37 und einer damit verbundenen Schabeleiste 38 gebildet. Die Tragleiste 37 besteht vorzugsweise aus lötfähigem Metall, während die Schabeleiste 38 aus härterem Material, typischerweise aus Hartmetall gefertigt ist. Die Tragleiste 37 weist einen sich entlang ihrer oberen Längskante ersteckenden Absatz 39 auf, auf dem die Schabeleiste 38 abgestützt ist (vgl. Fig. 5).

Ferner kann die der Schabeleiste 38 zugewandte Flanke der Tragleiste 37 gegenüber ihrem unteren Seitenabschnitt 40 abgeschrägt sein, so dass die Schabeleiste 38 gegenüber der Ebene des Seitenabschnitt 40 gekippt angeordnet ist. Der Kippwinkel liegt vorzugsweise in einem Bereich von 10° bis 15°. Schabeleiste 38 und Tragleiste 37 sind stoffschlüssig miteinander verbunden, beispielsweise miteinander verlötet.

In einer Ausführungsform ist vorgesehen, dass die dem Untertrumm 9 zugewandte Längskante der Schabeleiste 38 die Tragleiste 37 geringfügig überragt, beispielsweise um eine Höhe im Bereich von 0,5 bis 1 mm. Alternativ kann die obere Längskante (Abstreifkante) der Schabeleiste 38 aber auch bündig mit der oberen Längskante der Tragleiste 37 ausgebildet sein, wie dies beispielhaft in Fig. 12 dargestellt ist.

Wie die Figuren 3, 5 und 12 zeigen, ist jeder Schaber 11 gegenüber der Unterseite 8 des Untertrumms 9 um seine Längsachse gekippt. Der Winkel ε zwischen der Unterseite 8 des Untertrumms 9 und der Mittellängsebene der Schabeleiste 38 liegt im Bereich von ca. 95° bis 115°, vorzugsweise im Bereich von 100° bis 115°.

Die Enden 41, 42 der Schabeleiste 38 sind an der dem Untertrumm 9 zugewandten Längskante abgeschrägt. Die Schabeleiste 38 verschleißt während des Betriebes des Gurtförderers. Die an den Enden 40, 41 der Schabeleiste 38 ausgebildeten Schrägflächen bieten den Vorteil, dass bis zum Erreichen der Verschleißgrenze im Wesentlichen keine Änderung der Kantenschärfe eintritt. Aufgrund der stechenden Arbeitsweise des jeweiligen Schabers 11 behält dieser im Betrieb seine Kantenschärfe. Der Schaber 11 wird praktisch immer wieder "scharf" geschliffen.

Die erfindungsgemäße Anordnung 1 zum Abstreifen von Material vom Untertrumm 9 des Fördergurts eines Gurtförderers ist mit Ausnahme der Schabeleisten 38 vorzugsweise mit einer Ummantelung oder Beschichtung (nicht gezeigt) aus Kunststoff oder Elastomer versehen. Das Material der Ummantelung oder Beschichtung ist relativ weich und gummielastisch. Es weist beispielsweise eine Härte von ca. 45 Shore auf.

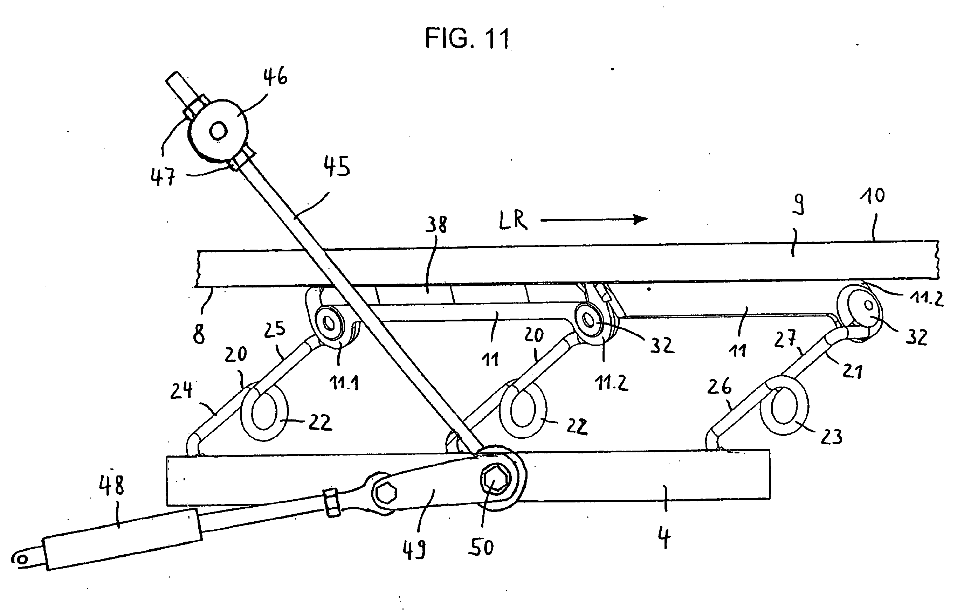

In Fig. 11 ist ein weiteres Ausführungsbeispiel für eine Aufhängung bzw. Halterung der einer erfindungsgemäßen Anordnung 1 zum Abstreifen von Material vom Untertrumm 9 des Fördergurts 9 eines Gurtförderers dargestellt. An den Außenseiten der Längsträger 3, 4 sind Zapfen 44 angebracht, an denen jeweils ein schräg nach oben ausgerichteter Lenker 45 gelenkig angeschlagen ist. Das obere Ende des Lenkers 45 ist mit einem Gewinde versehen, auf dem eine mit dem Traggerüst des Gurtförderers verbindbare Gelenkhalterung 46 montiert ist. Die Position der Gelenkhalterung 46 an dem stangenförmigen Lenker bzw. die wirksame Länge des Lenkers 45 kann mittels Muttern 47 fixiert werden. An dem Zapfen 44 ist ferner eine zweigliedrige Spanneinrichtung angeschlagen, die einen Stoßdämpfer 48 und eine Gelenklasche 49 umfasst. Das dem Zapfen abgewandte Ende des Stoßdämpfers 48 ist mit einem Gelenkauge versehen, um den Stoßdämpfer 48 ebenfalls mit dem Traggerüst des Gurtförderers verbinden zu können. Das dem Zapfen 44 zugewandte Ende des Stoßdämpfers 48 ist gelenkig mit der Gelenklasche 49 verbunden, die wiederum gelenkig mit dem Zapfen 44 verbunden ist. Nach der Ausrichtung der Anordnung 1 relativ zur Unterseite 8 des Untertrumms 9 wird die Gelenklasche 49 an dem Zapfen mittels einer Schraube 50 festgesetzt, so dass die Anordnung 1 mittels des Stoßdämpfers an die Unterseite 8 des Untertrumms 9 gedrückt wird. Im Normalbetrieb des Fördergurtes wird der Stoßdämpfer 48 auf Zug belastet. Bewegt sich der Fördergurt 10 jedoch entgegen der Laufrichtung LR, so wird der Stoßdämpfer 48 auf druck belastet. Die Halterung (Aufhängung) gemäß Fig. 11 trägt dem Umstand Rechnung, dass es bei einer Stillsetzung des Fördergurtes 10 nicht selten zu einem Zurücklaufen des Fördergurtes 10 gegen die Laufrichtung LR kommt.

### Bezugszeichenliste

- 1: Anordnung zum Abstreifen von Material
- 2: Tragrahmen
- 3: Längsträger des Tragrahmens
- 4: Längsträger des Tragrahmens
- 5: Querstrebe des Tragrahmens
- 6: Querstrebe des Tragrahmens
- 7: Querstrebe des Tragrahmens
- 8: Unterseite des Untertrumms
- 9: Untertrumm des Fördergurts
- 10: Fördergurt
- 11: Schaber
- 11.1: vorderer Endabschnitt des Schabers
- 11.2: hinterer Endabschnitt des Schabers
- 12: Lenker
- 13: Lenker
- 14: Längsträger
- 15: Lenker (Gewindestange)
- 16: Druckfeder
- 17: Gelenk
- 18: Gelenk
- 19: Abstützlager der Druckfeder
- 20: Schenkelfeder
- 21: Schenkelfeder
- 22: federnde Windung der Schenkelfeder
- 23: federnde Windung der Schenkelfeder
- 24: gerader Schenkelfederabschnitt
- 25: gerader Schenkelfederabschnitt
- 26: gerader Schenkelfederabschnitt
- 27: gerader Schenkelfederabschnitt
- 28: oberes Schenkelfederende von 20
- 29: oberes Schenkelfederende von 20
- 30: unteres Schenkelfederende von 21
- 31: unteres Schenkelfederende von 21
- 32: Niet (Metallbolzen)
- 33: Hülse
- 34: Bohrung
- 35: Flansch der Metallhülse
- 36: Metallhülse
- 37: Tragleiste
- 38: Schabeleiste
- 39: Absatz der Tragleiste
- 40: unterer Seitenabschnitt der Schabeleiste
- 41: Ende der Schabeleiste
- 42: Ende der Schabeleiste
- 43: geradliniger, abgewinkelter Schenkelabschnitt
- 44: Zapfen
- 45: Lenker
- 46: Gelenkhalterung
- 47: Muttern
- 48: Stoßdämpfer
- 49: Gelenklasche
- 50: Schraube
- AS: kürzester Abstand zwischen zwei Schabern einer Reihe
- LS: Länge der das Untertrumm berührenden Kante des Schabers
- LR: Laufrichtung des Untertrumms
- G1: Gruppe
- G2: Gruppe
- R1: Reihe
- R2: Reihe
- α: Winkel zwischen der Längsmittelachse des unteren Schenkelfederendes und der Radialebene der Windung
- β: Winkel der Bohrungslängsmittelachse gegenüber der Vertikalen
- γ: Winkel zwischen geradlinigem Schenkelfederabschnitt und abgewinkeltem Schenkelfederende
- δ: Winkel zwischen geradlinigem Schenkelfederabschnitt und abgewinkeltem Schenkelfederende
- ϕ: Winkel der Schrägstellung des Schabers gegenüber der Laufrichtung des Untertrumms
- ε: Winkel zwischen der Längsmittelebene des Schabers und der Unterseite des Untertrumms

## Patentansprüche

1. Anordnung (1) zum Abstreifen von Material vom Untertrumm (9) des Fördergurts (10) eines Gurtförderers, welche in Gruppen (G1, G2) gegliederte, über die Breite des Fördergurts verteilt angeordnete, federnd elastisch an der Unterseite (8) des Untertrumms anliegende Schaber (11) aufweist, die alle zur Laufrichtung (LR) des Untertrumms (9) schräg angeordnet sind, wobei die Schaber (11) einer ersten Gruppe (G1) abgewinkelt in Bezug auf die Schaber (11) einer benachbarten zweiten Gruppe (G2) ausgerichtet sind, **dadurch gekennzeichnet, dass** der jeweilige Schaber (11) über mindestens zwei gewundene Schenkelfedern (20, 21) wenigstens mittelbar am Traggerüst des Gurtförderers abgestützt ist, wobei die jeweilige Schenkelfeder (20, 21) mit ihrem oberen Ende (28, 29) mit einem in Laufrichtung (LR) vorderen (11.1) oder hinteren Endabschnitt (11.2) des Schabers (11) verbunden ist, mit ihrem unteren Ende (30, 31) drehbar mit einer Querstrebe (5, 6, 7) eines am Traggerüst des Gurtförderers montierten Tragrahmens (2) verbunden ist und mindestens einen im Wesentlichen schräg zur Laufrichtung (LR) sowie schräg nach unten gegen die Laufrichtung weisenden Schenkelabschnitt (24, 25; 26, 27) aufweist.

2. Anordnung nach Anspruch 1, **dadurch gekennzeichnet, dass** der jeweilige Schaber (11) schräg zur Laufrichtung des Untertrumms in einem Winkel (ϕ) im Bereich von 25° bis 55° angeordnet ist.

3. Anordnung nach Anspruch 1 oder 2, **dadurch gekennzeichnet, dass** die an dem jeweiligen Schaber (11) montierten Schenkelfedern (20 bzw. 21) im Wesentlichen identisch ausgebildet sind und/oder gleichsinnig ausgerichtet sind.

4. Anordnung nach einem der Ansprüche 1 bis 3, **dadurch gekennzeichnet, dass** das obere Schenkelfederende (28, 29) mit dem vorderen (11.1) oder hinteren Endabschnitt (11.2) des Schabers (11) gelenkig verbunden ist.

5. Anordnung nach einem der Ansprüche 1 bis 4, **dadurch gekennzeichnet, dass** das untere Schenkelfederende (30, 31) in eine in der Querstrebe (5, 6, 7) ausgebildete Bohrung (36) drehbar eingesteckt ist, wobei die Längsachse der Bohrung (36) schräg zur Vertikalen verläuft.

6. Anordnung nach einem der Ansprüche 1 bis 5, **dadurch gekennzeichnet, dass** das obere Schenkelfederende (28, 29) ösenförmig ausgebildet ist.

7. Anordnung nach einem der Ansprüche 1 bis 6, **dadurch gekennzeichnet, dass** der jeweilige Schaber (11) relativ zur Ebene der Unterseite (8) des Untertrumms (9) um seine Längsachse gekippt ausgerichtet ist, wobei der Winkel (ε) zwischen der Unterseite (8) des Untertrumms (9) und der Mittellängsebene des Schabers (11) im Bereich von 95° bis 115° liegt, vorzugsweise im Bereich von 100° bis 115° liegt.

8. Anordnung nach einem der Ansprüche 1 bis 7, **dadurch gekennzeichnet, dass** das obere Schenkelfederende (28, 29) mit dem mindestens einen im Wesentlichen schräg zur Laufrichtung (LR) sowie schräg nach unten gegen die Laufrichtung (LR) weisenden Schenkelabschnitt (25, 27) der Schenkelfeder (20, 21) einen Winkel (γ) im Bereich von 95° und 120° einschließt.

9. Anordnung nach einem der Ansprüche 1 bis 8 **dadurch gekennzeichnet, dass** die jeweilige Schenkelfeder (20, 21) mindestens eine federnde Windung (22, 23) und zwei im Wesentlichen schräg zur Laufrichtung (LR) sowie schräg nach unten gegen die Laufrichtung (LR) weisende Schenkelabschnitte (24, 25, 26, 27) aufweist.

10. Anordnung nach Anspruch 9, **dadurch gekennzeichnet, dass** die mindestens eine federnde Windung (22, 23) zwischen den beiden im Wesentlichen schräg zur Laufrichtung (LR) sowie schräg nach unten gegen die Laufrichtung (LR) weisenden Schenkelabschnitten (24, 25, 26, 27) integriert ist.

11. Anordnung nach einem der Ansprüche 1 bis 10, **dadurch gekennzeichnet, dass** das untere Schenkelfederende (30, 31) mit dem mindestens einen im Wesentlichen schräg zur Laufrichtung (LR) sowie schräg nach unten gegen die Laufrichtung (LR) weisenden Schenkelabschnitt (24, 26) der Schenkelfeder (20, 21) einen Winkel (δ) im Bereich von 110° und 120° einschließt.

## Claims

1. Arrangement (1) for stripping material from the lower run (9) of the conveyor belt (10) of a belt conveyor, which arrangement has scrapers (11) which are divided into groups (G1, G2), are arranged distributed over the width of the conveyor belt and lie resiliently elastically against the underside (8) of the lower run, which scrapers are all arranged obliquely to the direction of travel (LR) of the lower run (9), the scrapers (11) of a first group (G1) being oriented angled relative to the scrapers (11) of an adjacent second group (G2), **characterised in that** the respective scraper (11) is supported at least indirectly on the supporting frame of the belt conveyor via at least two wound leg springs (20, 21), the respective leg spring (20, 21) being connected by its upper end (28, 29) to a front (11.1) or rear (11.2), in the direction of travel (LR), end portion of the scraper (11), being connected rotatably by its lower end (30, 31) to a transverse strut (5, 6, 7) of a supporting frame (2) mounted on the supporting structure of the belt conveyor, and having at least one leg portion (24, 25; 26, 27) pointing substantially obliquely to the direction of travel (LR) and also obliquely downwards counter to the direction of travel.

2. Arrangement according to Claim 1, **characterised in that** the respective scraper (11) is arranged obliquely to the direction of travel of the lower run at an angle (ϕ) in the range of 25° to 55°.

3. Arrangement according to Claim 1 or 2, **characterised in that** the leg springs (20 or 21) mounted on the respective scraper (11) are formed substantially identically and/or are oriented in the same direction.

4. Arrangement according to one of Claims 1 to 3, **characterised in that** the upper leg-spring end (28, 29) is connected in an articulated manner to the front (11.1) or rear (11.2) end portion of the scraper (11).

5. Arrangement according to one of Claims 1 to 4, **characterised in that** the lower leg-spring end (30, 31) is rotatably inserted into a bore (36) formed in the transverse strut (5, 6, 7), the longitudinal axis of the bore (36) extending obliquely to the vertical.

6. Arrangement according to one of Claims 1 to 5, **characterised in that** the upper leg-spring end (28, 29) is formed in the shape of an eye.

7. Arrangement according to one of Claims 1 to 6, **characterised in that** the respective scraper (11) is oriented tilted about its longitudinal axis relative to the plane of the underside (8) of the lower run (9), the angle (ε) between the underside (8) of the lower run (9) and the central longitudinal plane of the scraper (11) lying in the range of 95° to 115°, preferably lying in the range of 100° to 115°.

8. Arrangement according to one of Claims 1 to 7, **characterised in that** the upper leg-spring end (28, 29) encloses an angle (γ) in the range of 95° and 120° with the at least one leg portion (25, 27) of the leg spring (20, 21) pointing substantially obliquely to the direction of travel (LR) and obliquely downwards counter to the direction of travel (LR).

9. Arrangement according to one of Claims 1 to 8, **characterised in that** the respective leg spring (20, 21) has at least one resilient winding (22, 23) and two leg portions (24, 25, 26, 27) pointing substantially obliquely to the direction of travel (LR) and obliquely downwards counter to the direction of travel (LR).

10. Arrangement according to Claim 9, **characterised in that** the at least one resilient winding (22, 23) is integrated between the two leg portions (24, 25, 26, 27) pointing substantially obliquely to the direction of travel (LR) and obliquely downwards counter to the direction of travel (LR).

11. Arrangement according to one of Claims 1 to 10, **characterised in that** the lower leg-spring end (30, 31) encloses an angle (δ) in the range of 110° and 120° with the at least one leg portion (24, 26) of the leg spring (20, 21) pointing substantially obliquely to the direction of travel (LR) and obliquely downwards counter to the direction of travel (LR).

## Revendications

1. Agencement (1) de raclage de matériau du brin inférieur (9) de la courroie de transport (10) d'un transporteur à courroie, qui présente des racloirs (11) structurés en groupes (G1, G2), disposés sur la largeur de la courroie de transport, reposant de manière élastique comme un ressort sur le côté inférieur (8) du brin inférieur qui sont tous disposés en biais par rapport au sens de marche (LR) du brin inférieur (9), dans lequel les racloirs (11) d'un premier groupe (G1) sont orientés de manière coudée par rapport aux racloirs (11) d'un second groupe voisin (G2), **caractérisé en ce que** le racloir respectif (11) est appuyé par le biais d'au moins deux ressorts à branches enroulés (20, 21) au moins indirectement sur l'infrastructure du transporteur à courroie, dans lequel le ressort à branches respectif (20, 21) est relié avec son extrémité supérieure (28, 29) à une section terminale avant (11.1) ou arrière (11.2) dans le sens de marche (LR) du racloir (11), est relié avec son extrémité inférieure (30, 31) à rotation avec une traverse (5, 6, 7) d'un cadre porteur (2) monté sur l'infrastructure du transporteur à courroie et présente au moins une section de branche (24, 25; 26, 27) tournée essentiellement en biais par rapport au sens de marche (LR) ainsi qu'en biais vers le bas à l'encontre du sens de marche.

2. Agencement selon la revendication 1, **caractérisé en ce que** le racloir respectif (11) est disposé en biais par rapport au sens de marche du brin inférieur à un angle (ϕ) dans la plage de 25° à 55°.

3. Agencement selon la revendication 1 ou 2, **caractérisé en ce que** les ressorts à branches (20 ou 21) montés sur le racloir respectif (11) sont réalisés de manière essentiellement identique et/ou sont orientés dans le même sens.

4. Agencement selon l'une quelconque des revendications 1 à 3, **caractérisé en ce que** l'extrémité supérieure de ressort à branches (28, 29) est reliée de manière articulée à la section terminale avant (11.1) ou arrière (11.2) du racloir (11).

5. Agencement selon l'une quelconque des revendications 1 à 4, **caractérisé en ce que** l'extrémité inférieure de ressort à branches (30, 31) est insérée à rotation dans un alésage (36) réalisé dans la traverse (5, 6, 7), dans lequel l'axe longitudinal de l'alésage (36) s'étend en biais par rapport à la verticale.

6. Agencement selon l'une quelconque des revendications 1 à 5, **caractérisé en ce que** l'extrémité supérieure de ressort à branches (28, 29) est réalisée en forme d'oeillet.

7. Agencement selon l'une quelconque des revendications 1 à 6, **caractérisé en ce que** le racloir respectif (11) est orienté de manière basculée autour de son axe longitudinal par rapport au plan du côté inférieur (8) du brin inférieur (9), dans lequel l'angle (ε) entre le côté inférieur (8) du brin inférieur (9) et le plan longitudinal médian du racloir (11) se situe dans la plage de 95° à 115°, de préférence dans la plage de 100° à 115°.

8. Agencement selon l'une quelconque des revendications 1 à 7, **caractérisé en ce que** l'extrémité supérieure de ressort à branches (28, 29) inclut avec l'au moins une section de branche (25, 27) tournée essentiellement en biais par rapport au sens de marche (LR) ainsi qu'en biais vers le bas à l'encontre du sens de marche (LR) du ressort à branches (20, 21) un angle (γ) dans la plage de 95° à 120°.

9. Agencement selon l'une quelconque des revendications 1 à 8, **caractérisé en ce que** le ressort à branches respectif (20, 21) présente au moins un enroulement élastique (22, 23) et deux sections de branches (24, 25, 26, 27) tournées essentiellement en biais par rapport au sens de marche (LR) ainsi qu'en biais vers le bas à l'encontre du sens de marche (LR).

10. Agencement selon la revendication 9, **caractérisé en ce que** l'au moins un enroulement élastique (22, 23) est intégré entre les deux sections de branches (24, 25, 26, 27) tournées essentiellement en biais par rapport au sens de marche (LR) ainsi qu'en biais vers le bas à l'encontre du sens de marche (LR).

11. Agencement selon l'une quelconque des revendications 1 à 10, **caractérisé en ce que** l'extrémité inférieure de ressort à branches (30, 31) inclut avec l'au moins une section de branche (24, 26) tournée essentiellement en biais par rapport au sens de marche (LR) ainsi qu'en biais vers le bas à l'encontre du sens de marche (LR) du ressort à branches (20, 21) un angle (δ) dans la plage de 110° à 120°.
